# EUROPÄISCHE PATENTSCHRIFT

(11) **EP 0 640 699 B1**
(45) Veröffentlichungstag und Bekanntmachung des Hinweises auf die Patenterteilung: **12.03.1997**
(21) Anmeldenummer: 94112486.9
(22) Anmeldetag: 10.08.1994
(51) Int. Cl.: C25D 13/10, C09D 7/12, C09D 5/44

(54) **Verfahren zur Herstellung von Dibutylzinnoxid-Zubereitungen und deren Verwendung in kathodisch abscheidbaren Elektrotauchlacken**
Process for the production of dibutyltin oxide preparations and their use in cathodically depositable electrodeposition paints.
Procédé pour préparations des compositions de l'oxide d'étain dibutylique et leur utilisation dans des peintures applicables par électrophorèse déposable à la cathode.

(30) Priorität: 16.08.1993 AT 1625/93
(43) Veröffentlichungstag der Anmeldung: 01.03.1995
(73) Patentinhaber: Vianova Resins AG, 8402 Werndorf (AT)
(72) Erfinder: Hönig, Helmut, Dr., A-8010 Graz (AT); Thausz, Robert, A-8041 Graz (AT)

(56) Entgegenhaltungen:
- EP-A- 0 193 685
- EP-A- 0 346 506

## Beschreibung

Die Erfindung betrifft ein Verfahren zur Herstellung von Dibutylzinnoxid-Zubereitungen, die als Dispergiermedium ein Pigmentpastenharz und eine spezifische Kombination von Tensiden enthalten, und deren Verwendung in kathodisch abscheidbaren Elektrotauchlacken.

Kationische Lackbindemittel, welche zur Formulierung von kathodisch abscheidbaren Elektrotauchlacken eingesetzt werden, vernetzen bei erhöhter Temperatur zu einem wesentlichen Teil durch Umurethanisierung, Umesterung oder durch die Reaktion endständiger Doppelbindungen.

Es ist bekannt, daß derartige Vernetzungsreaktionen durch Metallverbindungen katalysiert werden. Eine solche Katalyse ist im Falle der Härtung von kathodisch abgeschiedenen Lackfilmen in fast allen Fällen notwendig, um das von den Anwendern in der Industrie geforderte Eigenschaftsbild zu erreichen.

Wichtige in der Praxis verwendete Katalysatoren sind organische Verbindungen des vierwertigen Zinns, welche beispielsweise als Dibutylzinnoxid oder als Dibutylzinndilaurat eingesetzt werden.

Dibutylzinnoxid ist eine feste, in organischen Lösemitteln oder Wasser weitgehend unlösliche Substanz, welche in einer möglichst feinverteilten Form in den Lackansatz eingebracht werden muß, um katalytisch voll wirksam zu werden. Außerdem muß ein Tauchlack auch über eine längere Zeit lagerfähig sein (keine Sedimentation von Dibutylzinnoxid) und er darf im abgeschiedenen bzw. im eingebrannten Film keine Störungen der Oberfläche (Krater, Nadelstiche u.ä.) aufweisen.

Erfolgt die Zerkleinerung, wie das bei Pigmenten und Füllstoffen vielfach üblich ist, durch Anreiben in einem gebräuchlichen Lackbindemittel, so kann wegen der dabei auftretenden Temperaturbelastung die katalytische Wirkung des Dibutylzinnoxids bereits ausgelöst und unter Umständen das Bindemittel in seiner Reaktivität vorzeitig aktiviert werden.

Die Verwendung von gegenüber den Lackbindemitteln völlig inerten Dispergiermedien führt dagegen zu unvernetzten Molekülsegmenten im eingebrannten Film und ist ebenfalls nicht zielführend.

Es hat daher in letzter Zeit nicht an Versuchen gefehlt, durch eine geeignete Auswahl des Dispergiermediums den praktischen Einsatz von Dibutylzinnoxid zu erleichtern.

So wird in der EP 0 251 772 A2 ein kationisches Epoxidharz, welches Sulfoniumgruppen aufweist, als Dispergiermedium verwendet.

In der DE 39 40 781 A1 wird ein Verfahren zur Herstellung einer Katalysatorpaste für kathodisch abscheidbare Elektrotauchlacke bereitgestellt, bei dem Dibutylzinnoxid zunächst mit organischem Lösemittel und einer zur Neutralisation von kathodisch abscheidbaren Elektrotauchlacken üblichen organischen Säure vordispergiert und dann mit dem Anreibebindemittel und Wasser dispergiert und vermahlen wird.

Die AT-B 395.438 beansprucht ein Verfahren zur Herstellung von Organozinn-Zubereitungen durch mechanisches Dispergieren von Dibutylzinnoxid in einem pergiermedium, welches aus mindestens einer substituierten Oxazolidinverbindung und gegebenenfalls aus speziell ausgewählten, wassertoleranten organischen Lösemitteln besteht.

Die AT-B 396.372 betrifft schließlich Dibutylzinnoxid-Zubereitungen, die als Dispergiermedium ein verkapptes Polyisocyanat und/oder eine aktivierte Estergruppen tragende Härtungskomponente enthalten.

Nach den Erfahrungen in der Praxis können jedoch durch diese Vorschläge die eingangs angeführten Schwierigkeiten einer Dispergierung von Dibutylzinnoxid nicht vollständig überwunden werden.

Es wurde nun gefunden, daß eine technisch vorteilhafte Verwendung von Dibutylzinnoxid in kathodisch abscheidbaren Elektrotauchlacken möglich ist, wenn die mechanische Dispergierung des Dibutylzinnoxids in einem Gemisch aus einem Pigmentpastenharz und einer spezifischen Kombination von Tensiden erfolgt.

Die Erfindung betrifft demgemäß ein Verfahren zur Herstellung von Dibutylzinnoxid-Zubereitungen zur Katalysierung der Vernetzungsreaktionen von kationischen Lackbindemitteln, welches dadurch gekennzeichnet ist, daß man zur mechanischen Dispergierung von Dibutylzinnoxid auf eine Teilchengröße von 0,1 bis max. 0,5 µm ein Dispergiermedium verwendet, welches aus
(A) 60 bis 75 Gew.-% eines Pigmentpastenharzes auf der Basis von modifizierten Epoxidharz-Amin-Addukten,
(B) 10 bis 20 Gew.-% 2,4,7,9-Tetramethyl-5-decin-4,7-diol, und
(C) 10 bis 20 Gew.-% eines nichtionischen Tensids auf der Basis von Ethylenoxid-Propylenoxid-Copolymerisaten, deren Polypropylenblock eine molare Masse von ca. 1750 g/mol aufweist und deren Anteil an Polyethylenoxid im Gesamtmolekül 20 bis 80 Gew.-% beträgt,
besteht, wobei die Mengenverhältnisse (bezogen auf Feststoff) so gewählt werden, daß die Prozentzahlen für die Komponenten (A), (B) und (C) die Summe 100 ergeben müssen und die Dibutylzinnoxid-Zubereitungen einen Gehalt an Zinn, bezogen auf die Komponente (A), von 45 bis 85 Gew.-%, vorzugsweise von 55 bis 75 Gew.-%, aufweisen.

Die Erfindung betrifft weiters die Verwendung der erfindungsgemäß hergestellten Dibutylzinnoxid-Zubereitungen in Kombination mit durch Umesterung und/oder Umurethanisierung und/oder Reaktion endständiger Doppelbindungen vernetzbaren kationischen Lackbindemitteln zur Formulierung von kathodisch scheidbaren Elektrotauchlacken.

Derartige Elektrotauchlacke zeichnen sich aus durch eine sehr gute Lagerstabilität - auch in verdünnter Form -, durch einen geringen Strombedarf während der Abscheidung und durch störungsfreie Oberflächen, sowohl der unvernetzten als auch der eingebrannten Filme.

Für die Komponente (A) des Dispergiermediums werden Pigmentpastenharze auf der Basis von modifizierten Epoxidharz-Amin-Addukten eingesetzt, wie sie beispielsweise in der AT-B 394.372 beschrieben werden.

2,4,7,9-Tetramethyl-5-decin-4,7-diol als Komponente (B) ist ein Handelsprodukt, welches als Surfynol® 104 am Markt erhältlich ist (Hersteller: Air Products, USA).

Die Komponente (C) ist ein nichtionisches Tensid auf der Basis von Ethylenoxid-Propylenoxid-Copolymerisaten, deren Polypropylenblock eine molare Masse von ca. 1750 g/mol aufweist und deren Anteil an Polyethylenoxid im Gesamtmolekül 20 bis 80 Gew.-% beträgt. Diese Produkte sind unter dem Handelsnamen Pluronic® zugänglich, wobei die Pluronic® PE-Typen PE 6200, PE 6400 und PE 6800 verwendet werden.

Die Dispergierung des Dibutylzinnoxids im anspruchsgemäßen Medium erfolgt mit herkömmlichen Mahlaggregaten, wie in Perlmühlen oder auf Dreiwalzen.

Die Teilchengröße soll unter 0,5 µm liegen (beziehungsweise von 0,1 bis max. 0,5 µm), um einerseits eine optimale katalytische Wirksamkeit eit zu erreichen und andererseits Filmstörungen zu vermeiden.

Gegebenenfalls werden gemeinsam mit dem Dibutylzinnoxid auch andere Pigmente und Füllstoffe dispergiert.

Die erfindungsgemäß hergestellten Dibutylzinnoxid-Zubereitungen weisen einen Gehalt an Zinn, bezogen auf den Feststoff der Komponente (A), von 45 bis 85 Gew.-%, vorzugsweise von 55 bis 75 Gew.-%, auf.

Die Dibutylzinnoxid-Zubereitungen können in konzentrierter Form dem Lackbindemittel(gemisch) oder einer Pigmentpaste zugesetzt werden, wobei gegebenenfalls die Protonierung zusammen mit dem Bindemittel erfolgt. Sie können aber auch in neutralisierter und mit Wasser und/oder Hilfslösemitteln verdünnter Form dem Lack zugegeben werden.

Geeignete kationische Lackbindemittel, deren Vernetzungsreaktionen durch Umesterung, Umurethanisierung oder Reaktion endständiger Doppelbindungen mit Hilfe der erfindungsgemäß hergestellten Dibutylzinnoxid-Zubereitungen katalysiert werden, sind in großer Zahl aus der Literatur bekannt. Ein näheres Eingehen auf den Aufbau und die Chemie dieser Produkte ist daher nicht notwendig.

Die Dibutylzinnoxid-Zubereitungen sind auch in der Kälte mit den Lackbindemitteln einwandfrei verträglich. Wegen des organophilen Charakters des Dispergiermediums verbleibt das Dibutylzinnoxid in der Harzphase des verdünnten Lacks und damit im abgeschiedenen Film.

Die kathodisch abscheidbaren Elektrotauchlacke, deren Herstellung und lacktechnische Prüfung nach dem Fachmann geläufigen Methoden erfolgen, enthalten 0,2 bis 2,0 Gew.-%, vorzugsweise 0,5 bis 1,5 Gew.-%, Zinn, bezogen auf den Feststoff des gesamten Bindemittels, in Form der Dibutylzinnoxid- Zubereitungen.

Die Beispiele erläutern die Erfindung, ohne sie in ihrem Umfang zu beschränken. Alle Angaben in Teilen oder Prozenten beziehen sich, soferne nichts anderes angegeben ist, auf Gewichtseinheiten.

Folgende Abkürzungen werden in den Beispielen verwendet:
- EEW: Epoxidharzäquivalentgewicht, d.h. die eine Epoxidgruppe enthaltende Menge (in Gramm) eines Epoxidharzes
- BUGL: Monoethylenglykolmonobutylether
- VEW: vollentsalztes Wasser

### 1.1. Herstellung des Pigmentpastenharzes (A1) gemäß AT-B 394.372, Beispiel 1

In ein geeignetes Reaktionsgefäß, ausgestattet mit Rührer, Thermometer und Destillationsvorrichtung, werden 258 Tle 2-Ethylhexylamin (2 Mol) vorgelegt, auf 80°C erwärmt und anschließend 380 Tle eines aliphatischen Epoxidharzes (Basis Polypropylenglykol, EEW ca. 190) gleichmäßig innerhalb einer Stunde zugegeben. Dabei steigt die Temperatur auf 120°C. Der Ansatz wird eine weitere Stunde bei 120°C gehalten. Anschließend werden 693 Tle BUGL und bei 70°C 1900 Tle eines Epoxidharzes auf Bisphenol A-Basis (EEW ca. 475) zugegeben. Es wird der Ansatz wieder auf 120°C erwärmt und die Reaktion bei dieser Temperatur 1 1/2 Stunden fortgeführt. Das Zwischenprodukt weist einen Anteil an Polyoxyalkylenstruktureinheiten von 11 Gew.-% und einen Anteil an Alkylresten mit mehr als 3 C-Atomen von 9 Gew.-% auf.

Zu diesem Zwischenprodukt werden bei 100°C 204 Tle 3-Dimethylamino-1-propylamin (2 Mol) zugegeben. Nach 1 Stunde bei 100°C werden dem Ansatz 66 Tle Paraformaldehyd, 91%ig (2 Mol) zugegeben und bei ca. 140°C unter azeotroper Destillation mit Methylisobutylketon als Schleppmittel ca. 36 Tle Reaktionswasser entfernt. Danach wird das Methylisobutylketon unter Vakuum abgezogen, die Masse bei ca. 80°C mit 200 Tlen 30%iger Essigsäure (36 mMol/100 FH) neutralisiert und mit 3265 Tlen VEW auf einen Feststoffgehalt von ca. 40 % verdünnt.

### 1.2. Herstellung des Pigmentpastenharzes (A2) gemäß AT-B 394.372, Beispiel 3

In einem Reaktionsgefäß werden bei 80°C zu 533 Tlen BUGL 640 Tle eines aliphatischen Epoxidharzes (Basis Polypropylenglykol, EEW ca. 320), 800 Tle Epoxidharz auf Bisphenol A-Basis (EEW ca. 200), 456 Tle (2 Mol) Bisphenol A und 3 Tle Triethylamin zugegeben. Die Masse wird auf 130°C erwärmt und 2 Stunden gerührt. Das Produkt weist einen Polyoxyalkylenanteil von 28 Gew.-% auf.

Zu diesem Zwischenprodukt werden bei 80°C 204 Tle 3-Dimethylamino-1-propylamin (2 Mol) zugegeben. Nach einer Stunde bei 100°C werden dem Ansatz 66 Tle Paraformaldehyd, 91%ig (2 Mol) zugegeben und bei ca. 140°C unter azeotroper Destillation mit Methylisobutylketon als Schleppmittel ca. 36 Tle Reaktionswasser entfernt. Danach wird das Methylisobutylketon unter Vakuum abgezogen, die Masse bei ca. 80°C mit 192 Tlen 30%iger Essigsäure (36 mMol/100 FH) neutralisiert und mit 1880 Tlen VEW auf einen Feststoffgehalt von ca. 45 % verdünnt.

### 2.1. Herstellung des in den Lacken eingesetzten Bindemittels (BM1) gemäß EP 0 209 857 A2, Beispiel 1

In einem geeigneten Reaktionsgefäß werden 220 Tle Nonylphenol (1 Mol) mit 130 Tlen Diethylaminopropylamin (1 Mol) und 100 Tlen Toluol auf 75°C erwärmt und dem Ansatz anschließend unter leichtem Kühlen 33 Tle Paraformaldehyd, 91 % (1 Mol) zugegeben. Die Temperatur wird langsam gesteigert, bis sich eine zügige azeotrope Destillation einstellt. Nach Abtrennen von 21 Tlen Reaktionswasser wird das Toluol im Vakuum abdestilliert und das Produkt in 167 Tlen Diethylenglykoldimethylether gelöst.

Die so erhaltene Lösung wird bei 30 bis 40°C unter Kühlung mit 304 Tlen (1,0 Mol) eines mit 2-Ethylhexanol halbblockierten Toluylendiisocyanats versetzt und die Temperatur von 40°C ca. 1,5 Stunden bis zu einem NCO-Wert von Null gehalten.

Anschließend werden 475 Tle eines Epoxidharzes auf Basis von Bisphenol A (EEW 475) in 200 Tlen Propylenglykolmonomethylether gelöst und nach Zusatz von 835 Tlen des oben hergestellten Vorproduktes bei 95 bis 100°C bis zu einem Epoxidwert von Null reagiert. Der Feststoffgehalt beträgt ca. 75 %.

### 2.2. Herstellung der Bindemittel-Dispersion (BD1)

In einem geeigneten Behälter werden 2300 Tle VEW und 32 Tle Ameisensäure 5 n vorgelegt und unter Rühren 620 Tle des Bindemittels (BM1) zugesetzt. Der Feststoffgehalt beträgt ca. 15,8 %.

### 3. Herstellung der Dibutylzinnoxid-Zubereitungen (Beispiele (1) bis (3), Vergleichsbeispiel (V1)) und der Pigmentpasten (4) und (5)

Die Komponenten werden in den der Tabelle 1 bzw. der Tabelle 2 entsprechenden Mengenverhältnissen gemischt, vordispergiert und anschließend in einer Perlmühle vermahlen.

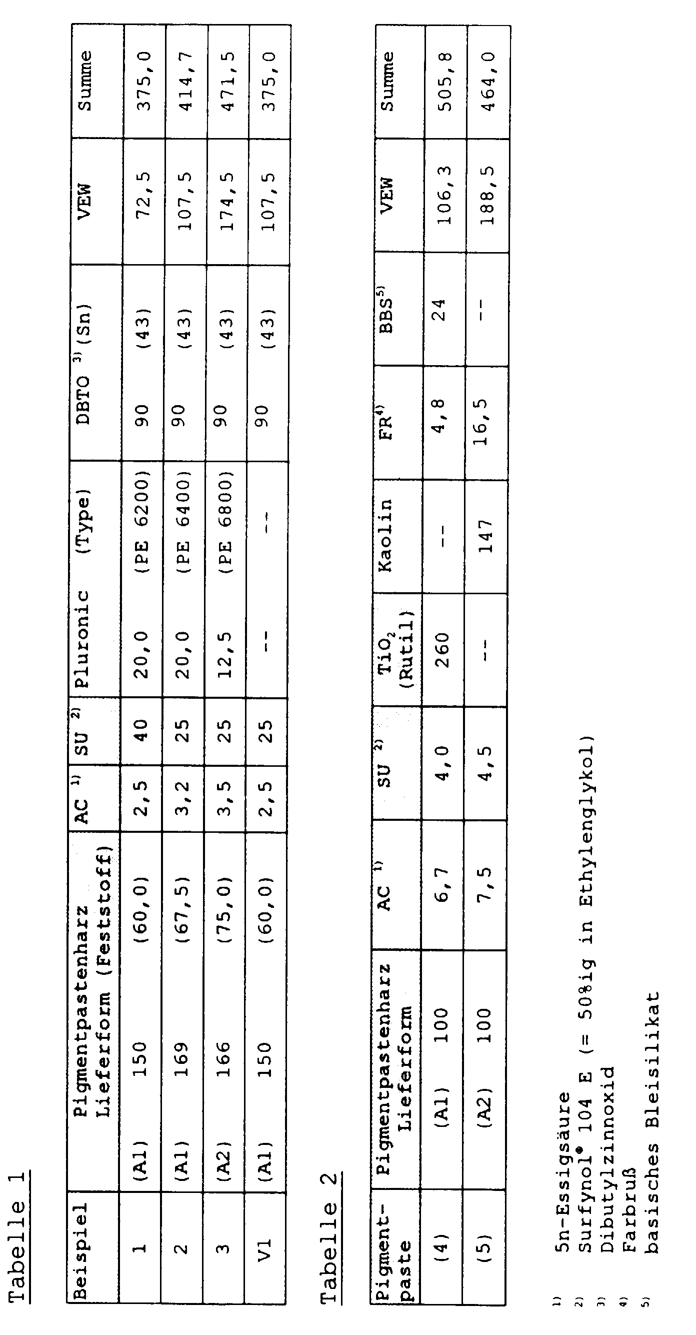

### 4. Herstellung der Pigmentpasten (6) bis (13)

Die Katalysatorpasten gemäß Tabelle 1 werden mit den Pigmentpasten gemäß Tabelle 2 in den der Tabelle 3 entsprechenden Mengenverhältnissen gemischt.

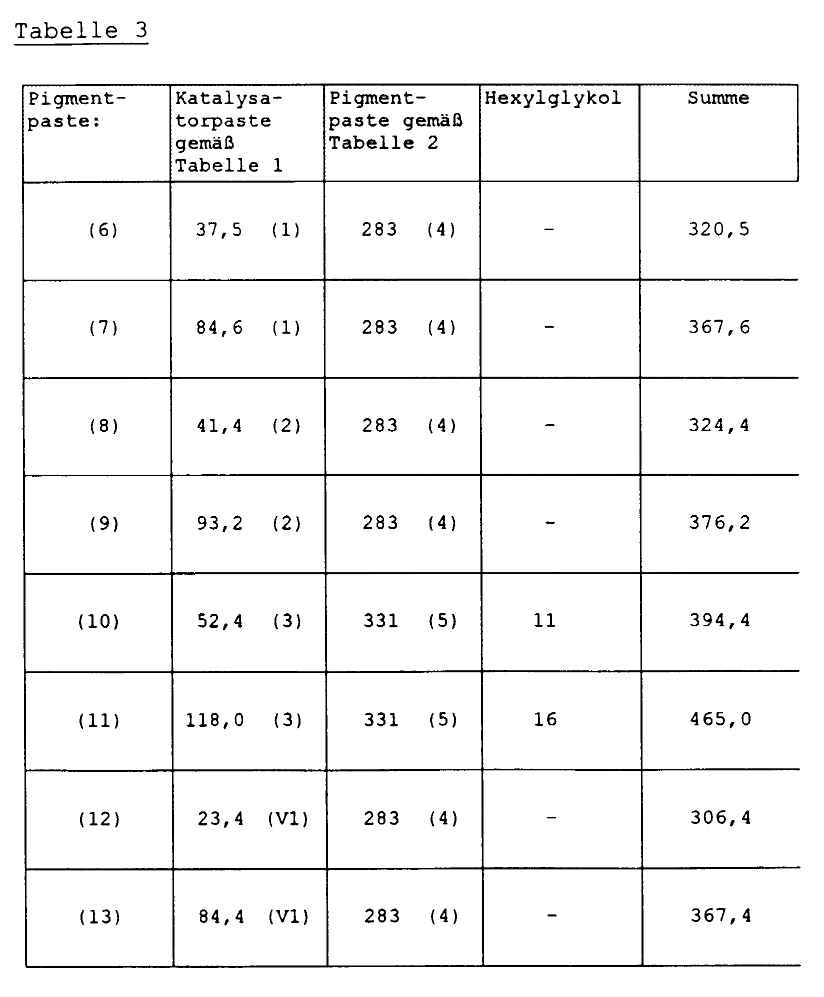

### 5. Prüfung der Rührstabilität und der "Horizontalbeschichtung" der kathodisch abscheidbaren Elektrotauchlacke KETL (14) - (21)

Die gemäß Abschnitt 2.2. hergestellte Bindemittel-Dispersion (BD1) wird mit den Pigmentpasten (6) bis (13) in den der Tabelle 4 entsprechenden Mengenverhältnissen gemischt.

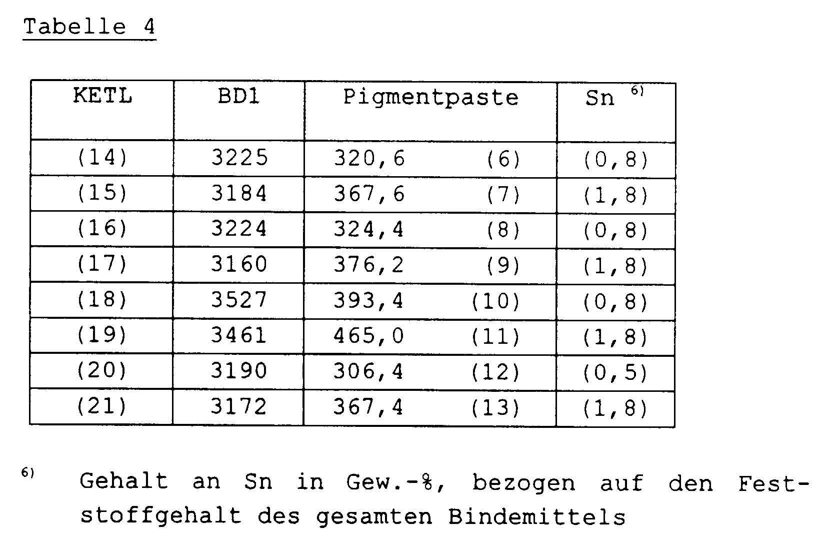

### 5.1. Rührstabilität

Die Lacke werden im offenen Gefäß bei ca. 30°C während 3 Wochen gerührt und anschließend durch ein Perlonsieb mit 30 µm Maschenweite gegossen.
- KETL (14) bis (19):: kein Siebrückstand
- KETL (20):: viel Siebrückstand
- KETL (21):: sehr viel Siebrückstand

### 5.2. "Horizontalbeschichtung"

Ein zinkphosphatiertes Stahlblech (ca. 10 x 20 cm) wird in der Mitte rechtwinkelig gebogen. Das Blech wird in das Beschichtungsbad so eingehängt, daß sich der waagerechte Schenkel des L-förmigen Stahlblechs etwa 15 cm unter der Oberfläche des Lackbades befindet und der senkrechte Schenkel nach oben gerichtet ist. Die Beschichtung erfolgt bei abgestellter Rührung mit einer Beschichtungsdauer von ca. 4 Minuten bei einer Spannung von 250 V. Nach der Beendigung der Beschichtung verbleibt das Blech noch 2 Minuten im Bad. Anschließend wird das Blech aus dem Bad genommen, nach weiteren 2 Minuten mit Wasser gespült und bei 180°C/20 min eingebrannt. Die Schichtstärke des eingebrannten Films beträgt zwischen 20 - 30 µm. Die Lackoberfläche wird auf Oberflächenstörungen beurteilt.
- KETL (14) bis (19):: keine Oberflächenstörungen
- KETL (20):: einzelne Nadelstiche und maskierte Gasbläschen
- KETL (21):: viele Nadelstiche und maskierte Gasbläschen

## Patentansprüche

1. Verfahren zur Herstellung von Dibutylzinnoxid-Zubereitungen zur Katalysierung der Vernetzungsreaktionen von kationischen Lackbindemitteln, dadurch gekennzeichnet, daß man zur mechanischen Dispergierung von Dibutylzinnoxid auf eine Teilchengröße von 0,1 bis max. 0,5 µm ein Dispergiermedium verwendet, welches aus
(A) 60 bis 75 Gew.-% eines Pigmentpastenharzes auf der Basis von modifizierten Epoxidharz-Amin-Addukten,
(B) 10 bis 20 Gew.-% 2,4,7,9-Tetramethyl-5-decin-4,7-diol und
(C) 10 bis 20 Gew.-% eines nichtionischen Tensids auf der Basis von Ethylenoxid-Propylenoxid-Copolymerisaten, deren Polypropylenblock eine molare Masse von ca. 1750 g/mol aufweist und deren Anteil an Polyethylenoxid im Gesamtmolekül 20 bis 80 Gew.-% beträgt,
besteht, wobei die Mengenverhältnisse (bezogen auf Feststoff) so gewählt werden, daß die Prozentzahlen für die Komponenten (A), (B) und (C) die Summe 100 ergeben müssen und die Dibutylzinnoxid-Zubereitungen einen Gehalt an Zinn, bezogen auf die Komponente (A), von 45 bis 85 Gew.-%, vorzugsweise von 55 bis 75 Gew.-%, aufweisen.

2. Verwendung der nach Anspruch 1 hergestellten Dibutylzinnoxid-Zubereitungen in Kombination mit durch Umesterung und/oder Umurethanisierung und/oder Reaktion endständiger Doppelbindungen vernetzbaren kationischen Lackbindemitteln zur Formulierung von kathodisch abscheidbaren Elektrotauchlacken mit der Maßgabe, daß dementsprechend formulierte Lacke 0,2 bis 2,0 Gew.-%, vorzugsweise 0,5 bis 1,5 Gew.-%, Zinn, bezogen auf den Feststoff des gesamten Bindemittels, in Form der Dibutylzinnoxid-Zubereitungen enthalten.

## Claims

1. Process for preparing dibutyltin oxide preparations for catalysing the crosslinking reactions of cationic paint binders, characterized in that the mechanical dispersion of dibutyltin oxide to a particle size of from 0.1 to max. 0.5 µm is carried out using a dispersion medium which comprises
(A) from 60 to 75% by weight of a pigment paste resin based on modified epoxy resin-amine adducts,
(B) from 10 to 20% by weight of 2,4,7,9-tetramethyl-5-decyne-4,7-diol
(C) from 10 to 20% by weight of a nonionic surfactant based on ethylene oxide-propylene oxide copolymers whose polypropylene block has a molar mass of about 1750 g/mol and whose proportion of polyethylene oxide in the total molecule is from 20 to 80% by weight,
the quantitative proportions (based on solids) being chosen such that the percentages for components (A), (B) and (C) must add up to 100, and the dibutyltin oxide preparations having a tin content, based on component (A), of from 45 to 85% by weight, preferably from 55 to 75% by weight.

2. Use of the dibutyltin oxide preparations prepared according to Claim 1, in combination with cationic paint binders which can be crosslinked by transesterification and/or transurethanization and/or reaction of terminal double bonds, to formulate cathodic electrodeposition coating materials, with the proviso that coating materials formulated accordingly contain from 0.2 to 2.0% by weight, preferably from 0.5 to 1.5% by weight, of tin, based on the solids content of the total binder, in the form of the dibutyltin oxide preparations.

## Revendications

1. Procédé pour la préparation de compositions d'oxyde de dibutylétain pour la catalyse des réactions de réticulation de liants pour peintures cationiques, caractérisé en ce que, pour la dispersion mécanique d'oxyde de dibutylétain d'une taille de particule de 0,1 à 0,5 µm au maximum, on utilise un milieu de dispersion constitué
A) de 60 à 75% en poids d'une résine pour pâte pigmentaire à base de produits d'addition de résine époxyde-amine modifiés,
B) de 10 à 20% en poids de 2,4,7,9-tétraméthyl-5-décyne-4,7-diol et
C) de 10 à 20% en poids d'un agent de surface non ionique à base de copolymères d'oxyde d'éthylène-oxyde de propylène dont la séquence polypropylène présente une masse moléculaire d'env. 1750 g/mole et dont la fraction d'oxyde de polyéthylène représente 20 à 80% en poids de la molécule totale, les proportions
(rapportées à la matière solide) étant choisies de manière que les pourcentages des composants (A), (B) et (C) donnent obligatoirement la somme de 100 et que les compositions d'oxyde de dibutylétain présentent une teneur en étain, rapportée au composant (A), de 45 à 85% en poids, de préférence de 55 à 75% en poids.

2. Utilisation des compositions d'oxyde de dibutylétain préparées selon la revendication 1 en association avec des liants pour peintures cationiques réticulables par interestérification et/ou transuréthannisation et/ou réaction des doubles liaisons en bout de chaîne pour la formulation de peintures électrophorétiques déposables à la cathode, sous réserve que les peintures formulées conformément à ce qui précède contiennent 0,2 à 2,0% en poids, de préférence 0,5 à 1,5% en poids d'étain, rapportés à la matière solide du liant total, sous forme de compositions d'oxyde de dibutylétain.
